# EUROPEAN PATENT APPLICATION

(11) **EP 3 998 432 A1**
(43) Date of publication of application: **18.05.2022**
(21) Application number: 20841261.9
(22) Date of filing: 30.06.2020
(51) Int. Cl.: F24H 9/00, F24H 9/18, F28D 1/06, F28D 7/02, F24H 1/20

(54) **STORAGE TANK UNIT**

(30) Priority: 16.07.2019 JP 2019131295
(71) Applicant: Daikin Industries, Ltd., Osaka-shi, Osaka 530-8323 (JP)
(72) Inventor: GOTOU Yurika, Osaka-shi, Osaka 530-8323 (JP); OKAMOTO Atsushi, Osaka-shi, Osaka 530-8323 (JP); OKAMOTO Masakazu, Osaka-shi, Osaka 530-8323 (JP); KOUNO Yasuhiro, Osaka-shi, Osaka 530-8323 (JP); FANG Qi, Osaka-shi, Osaka 530-8323 (JP); OHNO Masao, Osaka-shi, Osaka 530-8323 (JP)
(74) Representative: Hoffmann Eitle
(86) International application number: PCT/JP2020/025648
(87) International publication number: WO 2021/010155

(57) **Abstract**

A storage tank unit includes: a storage tank (51) configured to store fluid; and a heat exchanger (52) provided inside the storage tank (51) and configured to heat the fluid. The heat exchanger (52) includes a heat transfer tube (53) arranged away from an inner surface of a sidewall (56) of the storage tank (51) and a bottom surface of the storage tank (51), and is formed in a helical shape along the inner surface of the sidewall (56) of the storage tank (51). In a cross section perpendicular to an axis of the heat transfer tube (53), a vertical length (H) from a lower end to upper end of the heat transfer tube (53) is greater than a horizontal length (W) between both lateral ends of the heat transfer tube (53).

## Description

### TECHNICAL FIELD

The present disclosure relates to a storage tank unit.

### BACKGROUND ART

A storage tank unit having a storage tank for storing water and a heat exchanger provided inside the storage tank has been known. For example, Patent Document 1 discloses a storage tank including a heat exchanger formed in a helical shape and baffle plates. Water around the heat exchanger is heated, thereby occurring convection of water in the storage tank. The baffle plates provided inside the heat exchanger promote the convection of water.

### CITATION LIST

### PATENT DOCUMENT

Patent Document 1: EP 0633995 B1

### SUMMARY

### TECHNICAL PROBLEM

When a user wants to supply hot water from a storage tank to a target object, such as a bathtub, the storage tank is required to be able to efficiently raise the temperature of water in the tank.

An object of the present disclosure is to provide a storage tank unit capable of efficiently raising the temperature of fluid in a storage tank.

### SOLUTION TO THE PROBLEM

A first aspect is directed to a storage tank unit including: a storage tank (51) configured to store fluid; and a heat exchanger (52) provided inside the storage tank (51) and configured to heat the fluid. The heat exchanger (52) is arranged away from an inner surface of a sidewall (56) of the storage tank (51) and a bottom surface of the storage tank (51), and includes a heat transfer tube (53) formed in a helical shape along the inner surface of the sidewall (56) of the storage tank (51). In a cross section perpendicular to an axis of the heat transfer tube (53), a vertical length (H) from a lower end to upper end of the heat transfer tube (53) is greater than a horizontal length (W) between both lateral ends of the heat transfer tube (53).

In the first aspect, the heat exchanger (52) heats the fluid around the heat exchanger (52). This can create an upward flow of the fluid that rises along the inside of the heat exchanger (52). The heat transfer tube (53) has the vertical length (H) from the lower end to the upper end greater than the horizontal length (W) between the both lateral ends in the cross section perpendicular to its axis. This can increase a contact area between the heat transfer tube (53) and the ascending fluid.

A second aspect of the present disclosure is an embodiment of the first aspect. In the second aspect, the heat transfer tube (53) is formed of an elliptical tube or a flat tube.

In the second aspect, use of the heat transfer tube (53) formed of an elliptical tube or a flat tube can facilitate the provision of the heat transfer tube (53) having the vertical length (H) greater than the horizontal length (W) in the cross section perpendicular to its axis.

A third aspect of the present disclosure is an embodiment of the first or second aspect. In the third aspect, the heat transfer tube (53) has a vertically elongated shape in the cross section perpendicular to the axis of the heat transfer tube (53).

In the third aspect, the vertically elongated shape of the heat transfer tube (53) in the cross section perpendicular to its axis extends vertically along the upward flow of the fluid. This can increase a contact area between the heat transfer tube (53) and the ascending fluid.

A fourth aspect of the present disclosure is an embodiment of any one of the first to third aspects. In the fourth aspect, the heat transfer tube (53) includes a plurality of heat transfer portions (57, 57) vertically adjacent to each other, and for any vertically adjacent pair of the heat transfer portions (57, 57), a distance (B) between a lower end of the upper heat transfer portion (57) and an upper end of the lower heat transfer portion (57) is shorter than the vertical length (H) of the heat transfer tube (53).

In the fourth aspect, the fluid can be kept from flowing between the vertically adjacent heat transfer portions (57, 57). This can reduce a decrease in speed of the upward flow of the fluid.

A fifth aspect of the present disclosure is an embodiment of any one of the first to third aspects. In the fifth aspect, the heat transfer tube (53) includes a plurality of heat transfer portions (57, 57) vertically adjacent to each other, and the heat transfer portions (57, 57) vertically adjacent to each other are in contact with each other.

In the fifth aspect, the fluid can be prohibited from flowing between the vertically adjacent heat transfer portions (57, 57). This can reduce a decrease in speed of the upward flow of the fluid.

A sixth aspect of the present disclosure is an embodiment of any one of the first to fifth aspects. In the sixth aspect, the storage tank unit further includes: a rectifier (71) arranged above the heat exchanger (52) and configured to guide the fluid ascending in a space surrounded by the heat exchanger (52) toward the center of the storage tank (51).

In the sixth aspect, the downward flow of the fluid close to the sidewall (56) of the storage tank (51) and the upward flow of the fluid generated inside the heat exchanger (52) are kept from colliding with each other.

A seventh aspect of the present disclosure is an embodiment of any one of the first to sixth aspects. In the seventh aspect, the storage tank unit includes a cylindrical partition (74) arranged at least inside or outside of the heat exchanger (52) and extending along the heat transfer tube (53).

In the seventh aspect, a tubular space is formed between the heat exchanger (52) and the partition (74). Thus, the fluid in the tubular space is heated by the heat exchanger (52), and the fluid can ascend at a higher speed in this space.

An eighth aspect of the present disclosure is an embodiment of any one of the first to seventh aspects. In the eighth aspect, an inflow port (59) of the heat transfer tube (53) is formed at an upper end of the heat transfer tube (53), and an outflow port (60) of the heat transfer tube (53) is formed at a lower end of the heat transfer tube (53).

In the eighth aspect, a heating medium flowing through the heat transfer tube (53) and the fluid flowing through the inside of the heat exchanger (52) substantially flow in opposite directions. This can promote heat transfer from the heat exchanger (52) to the fluid.

A ninth aspect is an embodiment of any one of the first to eighth aspects. In the ninth aspect, the heat exchanger (52) is arranged only in a bottom space in the storage tank (51).

In the ninth aspect, a space for the fluid flowing by convection can be secured in an upper portion of the storage tank (51).

A tenth aspect of the present disclosure is directed to a hot water supply apparatus (20) including a storage tank unit configured to store water. The storage tank unit is the storage tank unit of any one of the first to ninth aspects.

### BRIEF DESCRIPTION OF THE DRAWINGS

FIG. 1 is a piping system diagram illustrating an overall configuration of a storage tank unit according to an embodiment.
FIG. 2 is a view illustrating a cross section of part of a heat transfer tube perpendicular to an axis of the heat transfer tube.
FIG. 3 is a schematic view illustrating a flow of a fluid heated by a heat exchanger in a hot water supply/storage tank.
FIG. 4 corresponds to FIG. 3, and illustrates a hot water supply/storage tank according to a first variation.
FIG. 5 corresponds to FIG. 3, and illustrates a hot water supply/storage tank according to a second variation.
FIG. 6 corresponds to FIG. 3, and illustrates a hot water supply/storage tank according to another embodiment.
FIG. 7 corresponds to FIG. 2, and illustrates a heat transfer tube according to another embodiment.

### DESCRIPTION OF EMBODIMENTS

Embodiments of the present disclosure will be described below with reference to the drawings. The following embodiments are merely exemplary ones in nature, and are not intended to limit the scope, applications, or use of the invention.

### «Embodiment»

A hot water supply apparatus (20) of the present disclosure is applied to a heat pump hot water supply unit (1). The hot water supply unit (1) heats water supplied from a water source (S) and stores the heated water in a storage tank (51). The heated water in the storage tank (51) is supplied to a predetermined hot water supply target (T). The water source (S) is a line through which water is supplied, and includes a water supply system. The hot water supply target (T) is a target where the heated water is used, and includes a shower, a faucet, and a bathtub.

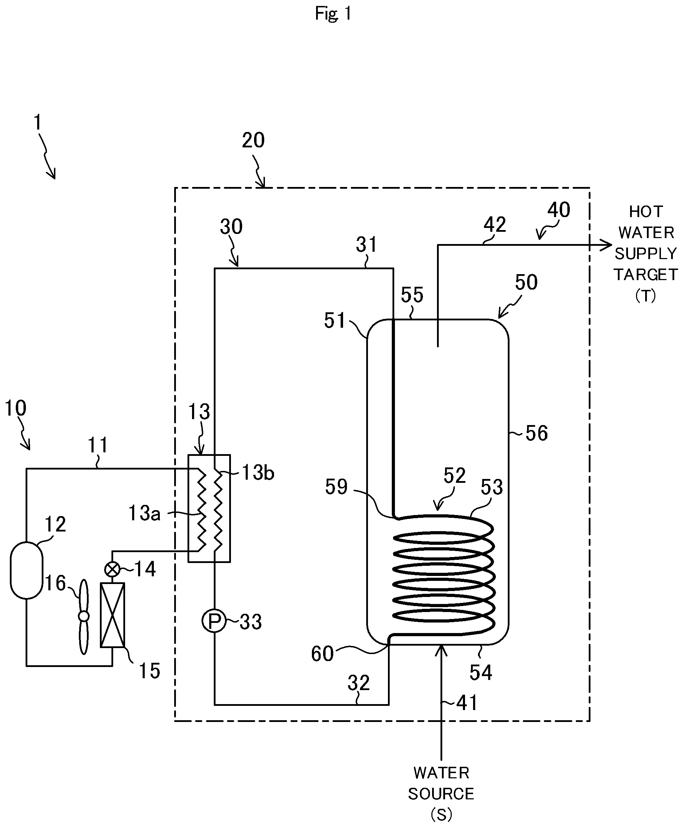

As illustrated in FIG. 1, the hot water supply unit (1) includes a heat source apparatus (10) and the hot water supply apparatus (20). The heat source apparatus (10) includes a refrigerant circuit (11). The hot water supply apparatus (20) has a heating channel (30) and a hot water supply channel (40). The heating channel (30) is a channel through which water as a heating medium flows. The hot water supply channel (40) is a water channel formed between the water source (S) and the hot water supply target (T). The hot water supply unit (1) includes a water heat exchanger (13). The refrigerant circuit (11) and the heating channel (30) are connected to each other via the water heat exchanger (13).

### <Heat Source Apparatus>

The heat source apparatus (10) is a heat source for producing heated water. The refrigerant circuit (11) of the heat source apparatus (10) is filled with a refrigerant. Examples of the refrigerant to be used include a fluorocarbon refrigerant and a natural refrigerant, such as propane. The refrigerant circulates in the refrigerant circuit (11), whereby a vapor compression refrigeration cycle is performed.

The refrigerant circuit (11) includes a compressor (12), the water heat exchanger (13), an expansion valve (14), and an air heat exchanger (15).

The compressor (12) sucks and compresses a low-pressure refrigerant. The compressor (12) discharges the refrigerant compressed to high pressure.

The water heat exchanger (13) heats water in the heating channel (30). The water heat exchanger (13) has a refrigerant channel (13a) and a water channel (13b). The water heat exchanger (13) enables heat exchange between the refrigerant flowing through the refrigerant channel (13a) and water as a heating medium flowing through the water channel (13b). The water heat exchanger (13) constitutes a radiator (condenser) that allows the refrigerant to dissipate heat.

The expansion valve (14) constitutes a decompression mechanism that decompresses the refrigerant. The expansion valve (14) decompresses the high-pressure refrigerant to low pressure. The expansion valve (14) is constituted of an electronic expansion valve, for example.

The air heat exchanger (15) enables heat exchange between the air and the refrigerant. The air heat exchanger (15) is placed outside a room. An outdoor fan (16) is installed near the air heat exchanger (15). The air transferred by the outdoor fan (16) passes through the air heat exchanger (15). In the air heat exchanger (15), the refrigerant absorbs heat from outdoor air and evaporates. The air heat exchanger (15) constitutes an evaporator.

### <Hot Water Supply Apparatus>

The hot water supply apparatus (20) includes the heating channel (30), the hot water supply channel (40), and a storage tank unit (50).

### <Heating Channel>

The heating channel (30) has the water heat exchanger (13), the storage tank unit (50), an inflow pipe (31), an outflow pipe (32), and a pump (33).

The storage tank unit (50) includes the storage tank (51) and the heat exchanger (52). The storage tank (51) stores water which is fluid. The heat exchanger (52) heats water in the storage tank (51). The heat exchanger (52) is placed inside the storage tank (51). The heat exchanger (52) includes a heat transfer tube (53) through which water as a heating medium flows.

The outflow pipe (32) is a pipe that allows water that has released heat in the storage tank (51) to flow from the heat transfer tube (53) into the water heat exchanger (13). An upstream end of the outflow pipe (32) is connected to a downstream end of the heat transfer tube (53). A downstream end of the outflow pipe (32) is connected to an upstream end of the water channel (13b) of the water heat exchanger.

The water heat exchanger (13) includes the water channel (13b). In the water heat exchanger (13), the refrigerant that dissipates heat heats water flowing from the outflow pipe (32).

The inflow pipe (31) is a pipe that allows water heated by the water heat exchanger (13) to flow into the storage tank (51). An upstream end of the inflow pipe (31) is connected to a downstream end of the water channel (13b). A downstream end of the inflow pipe (31) is connected to an upper end of the heat transfer tube (53) in the storage tank (51).

The pump (33) is a conveyer that conveys water in the heating channel (30). The pump (33) is provided in the outflow pipe (32).

### <Hot Water Supply Channel>

The hot water supply channel (40) includes a water supply pipe (41) and a hot water supply pipe (42).

The water supply pipe (41) is an inflow channel that allows the water source (S) and the storage tank (51) to communicate with each other. An upstream end of the water supply pipe (41) is connected to, for example, a pipe of a water supply system. A downstream end of the water supply pipe (41) is connected to a bottom (54) of the storage tank (51). The water supply pipe (41) supplies low-temperature water from the water source (S) to the storage tank (51) as appropriate. Specifically, the internal pressure of the storage tank (51) decreases when water in the storage tank (51) is supplied to the hot water supply target (T). The decrease in internal pressure brings a pressure difference between the water source (S) and the storage tank (51), and the storage tank (51) is replenished with low-temperature water from the water source (S) through the water supply pipe (41).

The hot water supply pipe (42) is an outflow channel that allows the storage tank (51) and the hot water supply target (T) to communicate with each other. An upstream end of the hot water supply pipe (42) is connected to a top (55) of the storage tank (51).

Water that has entered the storage tank (51) from the water supply pipe (41) is heated in the storage tank (51) and flows into the hot water supply pipe (42). The water in the hot water supply pipe (42) passes through the hot water supply pipe (42) and is supplied to the hot water supply target (T).

### -Storage Tank Unit-

### <Storage Tank>

The storage tank (51) is formed in a vertically long cylindrical shape. The storage tank (51) is a closed container. The storage tank (51) has a cylindrical sidewall (56), a bottom (54) that closes a lower end of the sidewall (56), and a top (55) that closes an upper end of the sidewall (56). The storage tank (51) stores water which is fluid.

The inflow pipe (31) penetrates the top (55) to enter the storage tank (51). The outflow pipe (32) penetrates the bottom (54) to enter the storage tank (51). The inflow pipe (31) and the outflow pipe (32) vertically extend in the storage tank (51).

### <Heat Exchanger>

The heat exchanger (52) is arranged away from an inner surface of the sidewall (56) of the storage tank (51) and a bottom surface of the storage tank (51). The heat exchanger (52) is fixed in the storage tank (51) with a fixing member (not shown).

The heat exchanger (52) includes the heat transfer tube (53) through which water as a heating medium flows. The heat transfer tube (53) is made of a material containing stainless steel. The heat transfer tube (53) is formed in a helical shape along an inner peripheral surface of the sidewall (56) of the storage tank (51). Specifically, the heat transfer tube (53) includes a plurality of heat transfer portions (57, 57) vertically adjacent to each other. Each of the heat transfer portions (57) corresponds to a single turn of the helical heat transfer tube (53). The heat transfer portions (57, 57) have the same shape.

An inlet end of the heat transfer tube (53) forms an inflow port (59) into which a heating medium flows. The inflow port (59) is located at an upper end of the heat transfer tube (53). The inflow port (59) is connected to an outlet end of the inflow pipe (31).

An outlet end of the heat transfer tube (53) forms an outflow port (60) from which the heating medium flows out of the heat transfer tube (53). The outflow port (60) is connected to an inlet end of the outflow pipe (32).

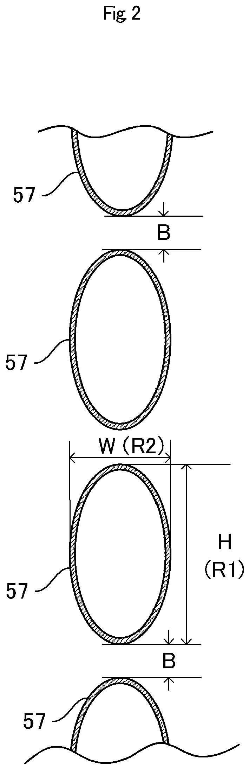

As illustrated in FIG. 2, the heat transfer tube (53) is an elliptical tube. The heat transfer tube (53) has a vertically elongated elliptical shape in a cross section perpendicular to the axis of the heat transfer tube (53). The direction of a longer axis of the heat transfer tube (53) coincides with the vertical direction. In other words, a vertical length (H) from the lower end to upper end of the heat transfer tube (53) is equal to the major axis (R1) of the heat transfer tube (53). A horizontal length (W) between both lateral ends of the heat transfer tube (53) is equal to the minor axis (R2) of the heat transfer tube (53). In other words, the heat transfer tube (53) has the greater vertical length (H) than the horizontal length (W).

For any vertically adjacent pair of the heat transfer portions (57, 57), a distance (B) between a lower end of the upper heat transfer portion (57) and an upper end of the lower heat transfer portion (57) is shorter than the major axis (R1) of the heat transfer tube (53). That is, the distance (B) is shorter than the vertical length (H) of the heat transfer tube (53).

A column-shaped internal space (P1) is formed inside the heat exchanger (52). A cylindrical side space (P2) is formed between the inner peripheral surface of the sidewall (56) of the storage tank (51) and the heat exchanger (52). A bottom space (P3) is formed between the heat exchanger (52) and the bottom surface of the storage tank (51). The heat exchanger (52) is arranged closer to the bottom of the storage tank (51). An upper space (P4) is formed above the heat exchanger (52).

### -Operation-

The hot water supply unit (1) performs a heating operation for heating water in the storage tank (51) and a hot water supply operation for supplying the heated water in the storage tank (51) to the hot water supply target (T).

In the heating operation, the heat source apparatus (10) shown in FIG. 1 operates, and the pump (33) is turned on.

When the heat source apparatus (10) is operating during the heating operation, the compressor (12) is driven, and the opening degree of the expansion valve (14) is adjusted. A refrigeration cycle is performed in the refrigerant circuit (11). Specifically, the refrigerant compressed in the compressor (12) flows through the refrigerant channel (13a) of the water heat exchanger (13). In the water heat exchanger (13), water in the refrigerant channel (13a) dissipates heat to water in the water channel (13b). As a result, the refrigerant in the refrigerant channel (13a) condenses. The refrigerant that has dissipated heat in the water heat exchanger (13) is decompressed by the expansion valve (14), and then flows through the air heat exchanger (15). In the air heat exchanger (15), the refrigerant evaporates in the air heat exchanger (15). The evaporated refrigerant is sucked into the compressor (12).

Water in the water channel (13b) heated by the water heat exchanger (13) flows through the inflow pipe (31) and enters the inflow port (59) of the heat exchanger (52). Water that has entered the inflow port (59) flows through the heat transfer tube (53), and goes into the outflow pipe (32) through the outflow port (60). Water in the outflow pipe (32) flows into the water heat exchanger (13) again, and is heated in the water channel (13b) by the refrigerant channel (13a).

In the hot water supply operation, water in the storage tank (51) is supplied to the hot water supply target (T). When the amount of water in the storage tank (51) decreases, water is supplied from the water source (S) into the storage tank (51).

Water supplied to the storage tank (51) lowers the temperature of water in the storage tank (51). Thus, the heating operation is performed to heat the water in the storage tank (51).

### -Flow of Water in Storage Tank-

The flow of water as fluid in the storage tank (51) will be described below.

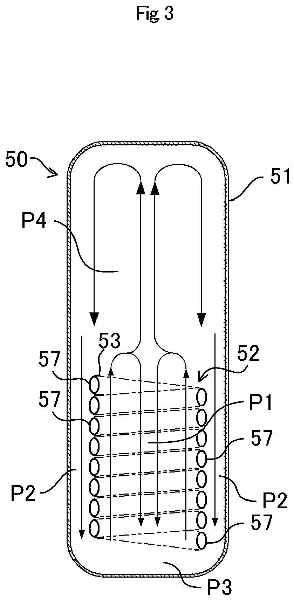

As illustrated in FIG. 3, fluid around the heat transfer tube (53) in the internal space (P1) is heated through heat exchange with the heat transfer tube (53). As a result, an upward flow of the fluid is created in the internal space (P1).

In the side space (P2), heat dissipation from the sidewall (56) of the storage tank (51) keeps the temperature of the fluid from rising. Thus, while the upward flow is created in the internal space (P1), a downward flow of the fluid is created in the side space (P2). The upward flow in the internal space (P1) goes to the upper space (P4) of the storage tank (51). The upward flow reaches the top (55) of the storage tank (51). Thereafter, the upward flow goes down to become a downward flow. This downward flow merges with the downward flow in the side space (P2).

The fluid closer to the center of the internal space (P1) has a lower temperature than the fluid around the heat exchanger (52). Thus, the upward flow in the internal space (P1) partially goes toward the center of the heat transfer tube (53). Thereafter, this partial flow goes downward, and enters the bottom space (P3). The fluid in the bottom space (P3) is reheated by the heat transfer tube (53) in the internal space (PI), and flows upward.

In this way, natural convection occurs in the storage tank (51).

### -Advantages of Embodiment-

According to the embodiment, the hot water supply apparatus (20) includes the storage tank (51) configured to store fluid, and the heat exchanger (52) provided inside the storage tank (51) and configured to heat the fluid. The heat exchanger (52) includes the heat transfer tube (53) arranged away from the inner surface of the sidewall (56) of the storage tank (51) and the bottom surface of the storage tank (51), and is formed in a helical shape along the inner surface of the sidewall (56) of the storage tank (51). In a cross section perpendicular to the axis of the heat transfer tube (53), the vertical length (H) from the lower end to upper end of the heat transfer tube (53) is greater than the horizontal length (W) between both lateral ends of the heat transfer tube (53). This makes a contact area between the fluid ascending in a space surrounded by the heat exchanger (52) and the heat transfer tube (53) larger than a contact area between, for example, the fluid and a circular heat transfer tube, promoting heat exchange between the heat transfer tube (53) and water.

The heat transfer tube (53) having the vertical length (H) greater than the horizontal length (W) can lower the resistance of the upward flow inside the heat exchanger (52) than, for example, a circular heat transfer tube. Thus, the upward flow can be accelerated, which can promote natural convection in the storage tank (51). In this way, the temperature of the fluid in the storage tank (51) can be efficiently raised.

In addition, promoting the natural convection in the storage tank (51) can quickly equalize the temperature of the fluid in the storage tank (51). Thus, no additional device such as a stirrer is required. This can facilitate the operation of the hot water supply apparatus (20) and can reduce the manufacturing cost.

According to the embodiment, the heat transfer tube (53) is formed of an elliptical tube. This allows easy provision of the heat transfer tube (53) having the vertical length (H) from the lower end to the upper end greater than the horizontal length (W) between both lateral ends in a cross section perpendicular to the axis of the heat transfer tube (53).

In the present embodiment, the cross-sectional shape of the heat transfer tube (53) perpendicular to its axis is elongated in the vertical direction. Specifically, the direction of the major axis of the heat transfer tube (53), which is an elliptical tube, coincides with the vertical direction. Thus, the cross-sectional shape of the heat transfer tube (53) perpendicular to its axis is vertically elongated along the direction of the upward flow. This can further increase the contact area between the heat transfer tube (53) and the fluid. The resistance to the upward flow can be further reduced.

In the embodiment, the heat transfer tube (53) includes a plurality of vertically adjacent heat transfer portions (57, 57). For any vertically adjacent pair of the heat transfer portions (57, 57), a distance (B) between a lower end of the upper heat transfer portion (57) and an upper end of the lower heat transfer portion (57) is shorter than the vertical length (H) of the heat transfer tube (53).

This configuration can keep the fluid forming the upward flow in the internal space (P1) from flowing between the adjacent heat transfer portions (57, 57). This can reduce a decrease in speed of the upward flow, and can promote natural convection.

The distance (B), which is made short, can downsize the heat exchanger (52) in the vertical direction. This can increase the volume of the upper space of the storage tank (51), and can promote the natural convection in the upper space.

Further, the helical heat transfer tube (53) can have more turns. This increases the contact area between the fluid forming the upward flow and the heat transfer tube (53). As a result, fluid heat exchange between the heat transfer tube (53) and water can be promoted.

In the embodiment, the inflow port (59) of the heat transfer tube (53) is provided at the upper end of the heat transfer tube (53). The outflow port (60) of the heat transfer tube (53) is provided at the lower end of the heat transfer tube (53).

Specifically, the heating medium heated by the water heat exchanger passes through the inflow pipe (31), and enters the heat transfer tube (53) via the inflow port (59) at the upper end of the heat transfer tube (53). The heating medium flows downward in the heat transfer tube (53), and goes into the outflow pipe (32) from the outflow port (60) at the lower end of the heat transfer tube (53). In other words, the heating medium flows from the upper end to lower end of the heat transfer tube (53). Thus, the heating medium flows substantially opposite to the upward flow of the heated fluid inside the heat exchanger (52). This can promote heat exchange between the heat transfer tube (53) and the fluid.

In the embodiment, the heat exchanger (52) is arranged only in the bottom space in the storage tank (51). Thus, a space for the fluid forming the upward flow by the effect of the heat transfer tube (53) can be secured in the upper portion of the storage tank (51). This can promote natural convection of the fluid.

### -Variations of Embodiment-

### <First Variation>

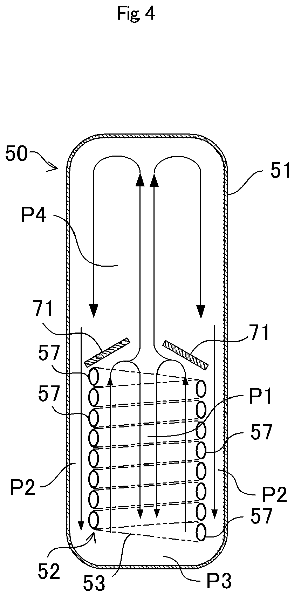

As illustrated in FIG. 4, a storage tank unit (50) according to a first variation of the present embodiment includes a rectifier (71). The rectifier (71) is fixed above the heat exchanger (52) in the storage tank (51). The rectifier (71) guides the fluid ascending in a space surrounded by the heat exchanger (52) toward the center of the storage tank (51). Specifically, the rectifier (71) is a plate member formed into a cylindrical, truncated cone shape with an open top and an open bottom. The rectifier (71) is arranged to be inclined upward from the vicinity of the upper end of the heat exchanger (52) as it goes toward the center of the heat exchanger (52). The rectifier (71) has an opening whose center coincides with the center axis of the heat exchanger (52).

According to this variation, the upward flow in the internal space (P1) and the downward flow from the upper space (P4) can be kept from colliding with each other near the upper end of the heat exchanger (52). This can further promote natural convection of the fluid.

### <Second Variation>

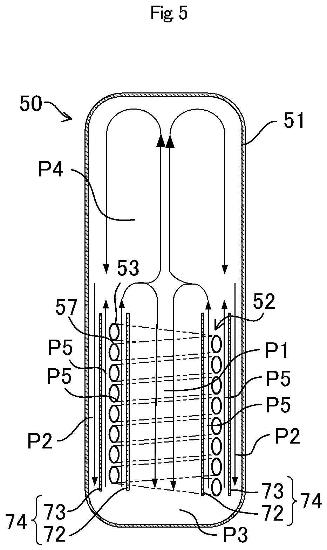

As illustrated in FIG. 5, a storage tank unit (50) according to a second variation of the present embodiment includes a partition (74). The partition (74) includes a first partition (72) and a second partition (73). The first partition (72) and the second partition (73) are formed in a cylindrical shape extending along the heat transfer tube (53). The first partition (72) is arranged inside the heat exchanger (52). The second partition (73) is arranged outside the heat exchanger (52). The upper ends of the first partition (72) and the second partition (73) are located at the same level as, or higher level than, the upper end of the heat exchanger (52). The lower ends of the first partition (72) and the second partition (73) are located at the same level as, or lower level than, the lower end of the heat exchanger (52). A side space (P2) is formed between the second partition (73) and the inner peripheral surface of the sidewall (56) of the storage tank (51). An internal space (P1) is formed inside the first partition (72).

According to this variation, a tubular space (P5) is formed between the heat exchanger (52) and the first partition (72), and another tubular space (P5) is formed between the heat exchanger (52) and the second partition (73). Thus, the fluid is directly heated by the heat exchanger (52) in the tubular spaces (P5). As a result, the storage tank (51) can further promote the heat exchange between the heat transfer tube (53) and the fluid than a storage tank having no partition (74). This can accelerate the upward flow in the tubular spaces (P5). Further, the fluid is drawn from the internal space (P1) and the side space (P2) into the tubular spaces (P5) via the bottom space (P3). Thus, as the upward flow in the tubular spaces (P5) is accelerated, the downward flow in the internal space (P1) and the side space (P2) are also accelerated. This can further promote natural convection of the fluid.

### «Other Embodiments»

The above embodiment may also have the following configurations.

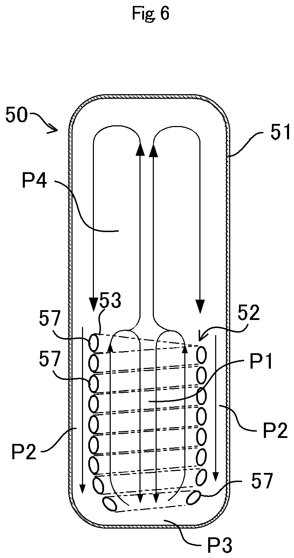

As illustrated in FIG. 6, the heat exchanger (52) of each of the embodiment and the variations may be configured such that the lower portion of the heat exchanger (52) is tapered to correspond to the shape of the bottom of the storage tank (51). Specifically, some of the heat transfer portions (57, 57) in the lower portion of the heat exchanger (52) have a diameter that gradually decreases toward the lower end. Thus, the major axis of the heat transfer tube (53) is inclined such that the lower end of the heat transfer portion (57, 57) is oriented toward the center of the storage tank. This configuration can fix the heat exchanger (52) much closer to the bottom surface of the storage tank (51). As a result, the upper space (P4) can be widened. This can promote natural convection of the fluid.

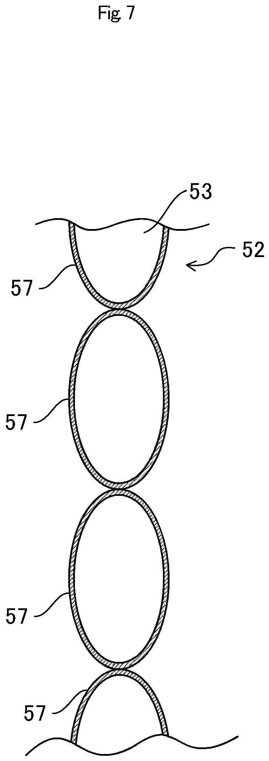

As illustrated in FIG. 7, for any vertically adjacent pair of the heat transfer portions (57, 57) in the heat exchanger (52) of each of the embodiment and the variations, the lower end of the upper heat transfer portion (57) may be in contact with the upper end of the lower heat transfer portion (57). This configuration can keep the fluid from flowing between the vertically adjacent heat transfer portions (57, 57). This can reduce a decrease in speed of the upward flow. Moreover, the heat exchanger (52) can be downsized in the vertical direction. This can further widen the upper space (P4), and can promote natural convection of the fluid. Further, the helical heat transfer tube (53) can have more turns. This can further increase the contact area between the upward flow of the fluid and the heat transfer tube (53). Thus, heat exchange between the heat transfer tube (53) and the fluid can be promoted.

In the heat exchanger (52) of each of the embodiment and the variations, the vertical length (H) from the lower end to upper end of the heat transfer tube (53) is greater than the horizontal length (W) between both lateral ends of the heat transfer tube (53) in a cross section perpendicular to the axis of the heat transfer tube (53). Thus, when the heat transfer tube (53) is an elliptical tube, the major axis of the heat transfer tube (53) may be inclined such that the upper end of each heat transfer portion (57) is oriented toward the center of the storage tank (51).

In the heat exchanger (52) of each of the embodiment and the variations, the heat transfer tube (53) may be a flat tube. The heat transfer tube (53) may be made of a material containing copper.

The heat exchanger (52) of the second variation may have the partition (74) including only one of the first partition (72) or the second partition (73). When the fluid in the tubular space (P5) between the heat transfer tube (53) and the first partition (72) or in the tubular space (P5) between the heat transfer tube (53) and the second partition (73) is heated, the upward flow can be accelerated. This can promote natural convection of the fluid.

In each of the embodiment and the variations, the heating medium flowing through the heat transfer tube (53) may be a refrigerant or brine.

In each of the embodiment and the variations, the storage tank (51) may be an open storage tank having an open top.

While the embodiment and variations thereof have been described above, it will be understood that various changes in form and details may be made without departing from the spirit and scope of the claims. The embodiment, the variations, and the other embodiments may be combined and replaced with each other without deteriorating intended functions of the present disclosure. The expressions of "first," "second," and "third" described above are used to distinguish the terms to which these expressions are given, and do not limit the number and order of the terms.

### INDUSTRIAL APPLICABILITY

The present disclosure is useful for a storage tank unit.

### DESCRIPTION OF REFERENCE CHARACTERS

- 20: Hot Water Supply Apparatus
- 30: Storage Tank
- 50: Tank Unit
- 51: Storage Tank
- 52: Heat Exchanger
- 53: Heat Transfer Tube
- 57: Heat Transfer Portion
- 59: Inflow Port
- 60: Outflow Port
- 71: Rectifier
- 74: Partition
- H: Vertical Length
- W: Horizontal Length
- B: Distance

## Claims

1. A storage tank unit, comprising:
a storage tank (51) configured to store fluid; and
a heat exchanger (52) provided inside the storage tank (51) and configured to heat the fluid, wherein
the heat exchanger (52)
is arranged away from an inner surface of a sidewall (56) of the storage tank (51) and a bottom surface of the storage tank (51), and
includes a heat transfer tube (53) formed in a helical shape along the inner surface of the sidewall (56) of the storage tank (51), and
in a cross section perpendicular to an axis of the heat transfer tube (53), a vertical length (H) from a lower end to upper end of the heat transfer tube (53) is greater than a horizontal length (W) between both lateral ends of the heat transfer tube (53).

2. The storage tank unit of claim 1, wherein
the heat transfer tube (53) is formed of an elliptical tube or a flat tube.

3. The storage tank unit of claim 1 or 2, wherein
the heat transfer tube (53) has a vertically elongated shape in the cross section perpendicular to the axis of the heat transfer tube (53).

4. The storage tank unit of any one of claims 1 to 3, wherein
the heat transfer tube (53) includes a plurality of heat transfer portions (57, 57) vertically adjacent to each other, and
for any vertically adjacent pair of the heat transfer portions (57, 57), a distance (B) between a lower end of the upper heat transfer portion (57) and an upper end of the lower heat transfer portion (57) is shorter than the vertical length (H) of the heat transfer tube (53).

5. The storage tank unit of any one of claims 1 to 3, wherein
the heat transfer tube (53) includes a plurality of heat transfer portions (57, 57) vertically adjacent to each other, and
the heat transfer portions (57, 57) vertically adjacent to each other are in contact with each other.

6. The storage tank unit of any one of claims 1 to 5, further comprising:
a rectifier (71) arranged above the heat exchanger (52) and configured to guide the fluid ascending in a space surrounded by the heat exchanger (52) toward the center of the storage tank (51).

7. The storage tank unit of any one of claims 1 to 6, further comprising:
a cylindrical partition (74) arranged at least inside or outside of the heat exchanger (52) and extending along the heat transfer tube (53).

8. The storage tank unit of any one of claims 1 to 7, wherein
an inflow port (59) of the heat transfer tube (53) is formed at an upper end of the heat transfer tube (53), and
an outflow port (60) of the heat transfer tube (53) is formed at a lower end of the heat transfer tube (53).

9. The storage tank unit of any one of claims 1 to 8, wherein
the heat exchanger (52) is arranged only in a bottom space in the storage tank (51).

10. A hot water supply apparatus (20), comprising
a storage tank unit (50) configured to store fluid, wherein
the storage tank unit (50) is the storage tank unit (50) of any one of claims 1 to 9.
